# EUROPEAN PATENT APPLICATION

(11) **EP 2 293 432 A1**
(43) Date of publication of application: **09.03.2011**
(21) Application number: 09169645.0
(22) Date of filing: 07.09.2009
(51) Int. Cl.: H02P 9/10, H02P 9/30

(54) **Static exciter of an electric generator, method for retrofitting and method for operating the same**

(71) Applicant: Alstom Technology Ltd, 5400 Baden (CH)
(72) Inventor: Dalessandro, Luca, 8005, Zurich (CH)

(57) **Abstract**

The static exciter (1) of an electric generator (2) comprises a main transformer (8) having its high voltage side connected to the grid (5) and its low voltage side connected to a field circuit converter (9) that feeds a generator field circuit (3). The static exciter (1) further comprises a control unit (11) arranged to detect the status of the grid (5) to cause at least a capacitor bank (13) to supply energy to said generator field circuit (3) in case the voltage of the grid (5) falls below a prefixed voltage value. The capacitor bank (13) is connected between the low voltage side of the main transformer (8) and the AC side of the field circuit converter (9). The invention also refers to a method for retrofitting a method for operating a static exciter (1).

## Description

### TECHNICAL FIELD

The present invention relates to a static exciter of an electric generator, a method for retrofitting and a method for operating the same.

### BACKGROUND OF THE INVENTION

Electric synchronous generators comprise a stator typically having an armature circuit and a rotor typically hosting a field circuit.

During operation, while the rotor rotates, the field circuit is energised such that electric voltage is induced in the armature circuit, due to the flux rate of change.

In order to energise the field circuit, usually a transformer is connected to the grid (or busbar) at its high voltage side and has its low voltage side connected to an AC/DC converter.

This AC/DC converter rectifies the AC voltage supplied from the transformer into DC voltage and supplies it to the field circuit of the generator.

Since the electric power for feeding the field circuit is directly supplied from the grid, in case a failure or disturbance at the grid occurs, causing the voltage at the grid to temporary fall, the stability of the generator/grid system may be compromised such that grid and generator may lose their synchronisation.

Electric grids are often provided with automatic security and protection systems that intervene when such failures occur to restore the nominal grid voltage; nevertheless it usually takes up to some seconds to restore the grid voltage, thus the stability of the generator/grid system cannot be guaranteed if a failure occurs.

US2007/0296275 discloses to provide a security circuit arranged to inject electric power into the field circuit in case a failure at the grid occurs, to guarantee the stability of the generator/grid system to prevent that they lose their synchronisation.

This security circuit includes a capacitor bank, a switch to be activated in case of grid failure, and a diode to be directly inserted into the field circuit (i.e. this diode must be placed on the rotor).

In case a failure at the grid occurs, the switch is activated such that the capacitor bank supplies its energy into the field circuit.

Nevertheless, even if this technique proved to be very efficient, its implementation may be difficult, costly and time-consuming in some cases, since it requires the diode to be placed on the rotor.

In particular, retrofitting of existing electric generators is difficult because the generator casing must be opened and the diode must be installed on the rotor.

This operation is particularly time consuming and costly.

### SUMMARY OF THE INVENTION

The technical aim of the present invention is therefore to provide a static exciter, a method for retrofitting and a method for operating a static exciter by which the said problems of the known art are eliminated.

Within the scope of this technical aim, an aspect of the invention is to provide a static exciter and a method for operating the same that can be easily, cost-efficiently and time-efficiently implemented.

Another aspect of the invention is to provide a retrofitting method that can be easily, cost-efficiently and time-efficiently implemented.

The technical aim, together with these and further aspects, are attained according to the invention by providing a static exciter, a method for retrofitting and a method for operating a static exciter in accordance with the accompanying claims.

### BRIEF DESCRIPTION OF THE DRAWINGS

Further characteristics and advantages of the invention will be more apparent from the description of a preferred but non-exclusive embodiment of the static exciter and methods according to the invention, illustrated by way of non-limiting example in the accompanying drawings, in which:
Figure 1 is a schematic view of the static exciter in a first embodiment of the invention;
Figure 2 is a particular of a second embodiment of the static exciter of the invention;
Figure 3 is a third embodiment of the static exciter of the invention; and
Figure 4 is a particular of figure 3.

### DETAILED DESCRIPTION OF THE INVENTION

With reference to the figures, these show a static exciter 1 of an electric generator 2.

The electric generator 2 has a field circuit 3 and a busbar 4 (stator three-phase circuit) connected to an electric grid 5 via a transformer 6.

The static exciter 1 comprises a main transformer 8 having its high voltage side connected to the grid 5 (typically, as shown in the figures, the main transformer 8 is directly connected to the busbar 4 and is connected to the grid 5 via the transformer 6) and its low voltage side connected to a field circuit converter 9 (typically a rectifier).

The field circuit converter 9 converts the AC voltage from the main transformer 8 and feeds the generator field circuit 3 with a DC voltage.

The static exciter 1 further comprises a control unit 11 arranged to detect the status of the grid 5 to cause at least a capacitor bank 13 to supply energy into the generator field circuit 3 in case the grid voltage falls below a prefixed voltage value.

The capacitor bank 13 is connected between the low voltage side of the main transformer 8 and the AC side of the field circuit converter 9.

Advantageously, the static exciter also comprises at least a coupling circuit 15 connecting the capacitor bank 13 to connection lines 16 between the low voltage side of the main transformer 8 and the AC side of the field circuit converter 9.

In the following, different embodiments of the invention will de described in detail.

### EMBODIMENT 1

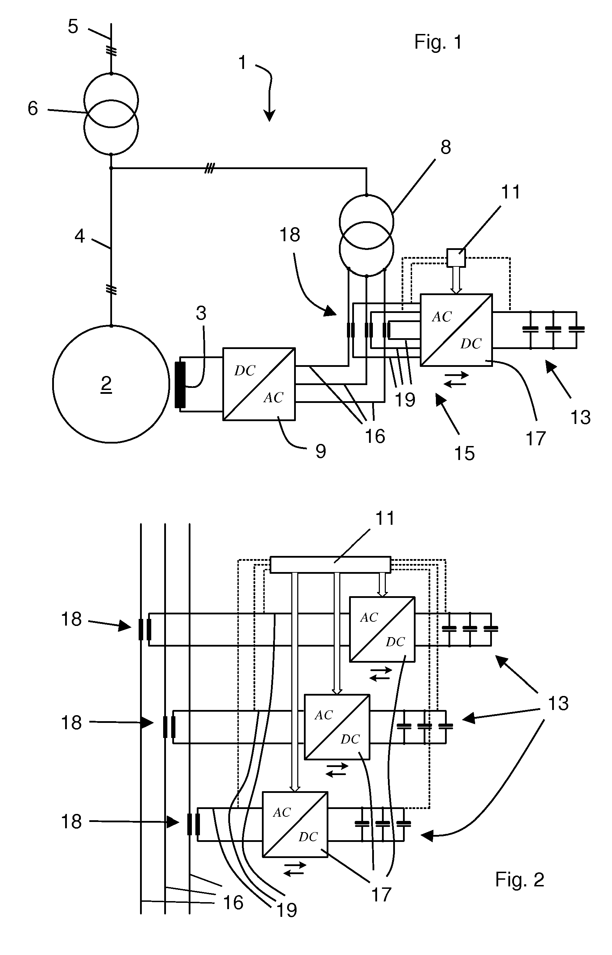

In a first embodiment of the static exciter 1 (figure 1) the coupling circuit 15 comprises an auxiliary three-phase converter 17 having a DC side connected to the capacitor bank 13 and an AC side coupled to the connection lines 16.

Preferably the auxiliary converter 17 is a bidirectional converter, such that charging and discharging of the capacitor bank 13 is allowed.

For example, the auxiliary converter 17 is made of a power semiconductor element bridge (IGBT, thristors); in any case these converters are well known in the art and any suitable converter or power semiconductor element disposition may be used to implement the present invention.

The AC side of the auxiliary converter 17 is inductively coupled to the connection lines 16 and, in this respect, the inductive coupling is realised via an auxiliary transformer 18.

In this embodiment of the invention, the control unit 11 is connected to at least two auxiliary connection lines 19. Naturally a connection also to all three auxiliary connection lines 19 may be provided and, in case of different configuration, (for example more or less than three phases) more or less than two connections may be provided.

In addition, the control unit 11 is connected to the auxiliary converter 17 to drive it.

The control unit 11 detects the voltage of the auxiliary connection lines 19 between the auxiliary converter 17 and the auxiliary transformer 18 and drives the auxiliary converter 17 accordingly.

In particular, the control unit 11 drives the auxiliary converter 17 such that it lets the capacitor bank 13 be discharged or charged.

The control unit 11 is also connected to the capacitor bank 13 to control its charging level.

The operation of the static exciter in this embodiment is apparent from that described and illustrated and is substantially the following.

During normal operation (with the voltage grid at its nominal value) the control unit 11 drives the auxiliary converter 17 such that it lets the electric power pass through it from the auxiliary transformer 18 to the capacitor bank 13.

In this situation the capacitor bank 13 is charged, such that in case of failure it is always charged and ready to discharge its energy into the field circuit 3.

When at the grid 5 a failure occurs, the grid voltage falls and, thus, also the busbar voltage falls and the voltage at the low voltage side of the main transformer 8 falls; this causes also the voltage at the auxiliary connection lines 19 to fall.

When the control unit 11 detects that the voltage at the auxiliary connection lines 19 has fallen below a prefixed voltage value, it drives the auxiliary converter 17 such that it allows the electric power to pass through it, from the capacitor bank 13 to the auxiliary transformer 18.

This causes the capacitor bank 13 to be discharged and its energy to be provided, through the auxiliary converter 17 and auxiliary transformer 18, to the connection lines 16 and thus, through the field circuit converter 9, to the field circuit 3.

As known in the art, when a failure at the grid 5 occurs, a number of automatic protection and control systems intervene to restore the grid voltage; usually restoration of the grid voltage is carried out in few seconds.

Therefore, as soon as the grid voltage is restored (thus also the auxiliary connection line voltage is restored) the control unit 11 drives the auxiliary converter 17 such that it allows electric power to pass though it from the auxiliary transformer 18 to the capacitor bank 13 again.

Thus the capacitor bank 13 is charged to be ready to intervene in case of further grid failures.

### EMBODIMENT 2

Figure 2 shows a second embodiment of the static exciter of the invention. In figure 2 elements similar or equal to those already described with reference to the first embodiment have the same references.

The static exciter in the second embodiment has the same structure and features of that of the first embodiment.

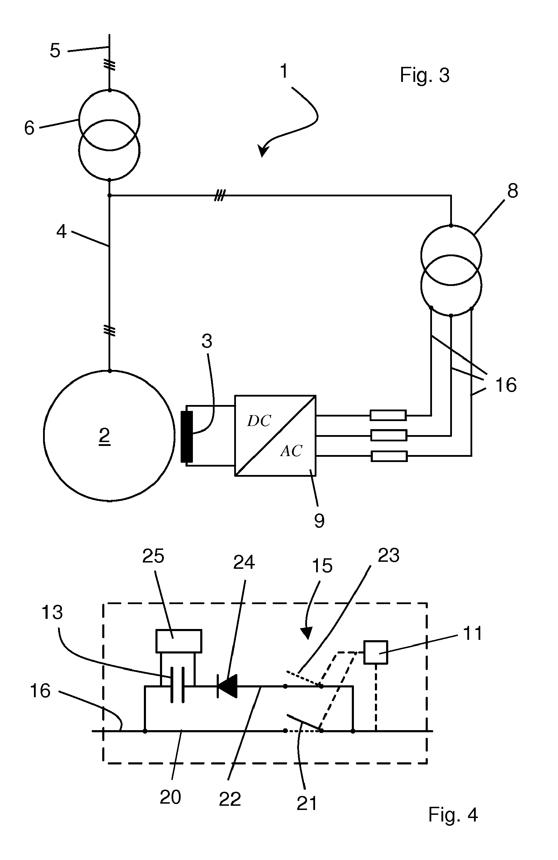

In addition, this static exciter has three capacitor banks 13 each connected to an auxiliary single phase converter 17 connected to an auxiliary transformer 18 coupled to a connection line 16 between the main transformer 8 and the field circuit converter 9; moreover, a control unit 11 for each auxiliary converter 17 is provided or, alternatively, a single control unit 11 controlling independently each auxiliary converter 17 is provided (this embodiment is shown in figure 4).

In other words, the static exciter has one electric power injection circuit for each phase (each electric power injection circuit comprising a capacitor bank 13, an auxiliary converter 17 and an auxiliary transformer 18), whereas the embodiment of figure 1 has only one three-phase electric power injection circuit.

The operation of the static exciter in this embodiment is clear in particular in light of the operation of the static exciter of the first embodiment.

### EMBODIMENT 3

Figures 3 and 4 show a third embodiment of the static exciter 1 of the invention. Also in these figures, elements similar or equal to those already described have the same references.

In particular, in figure 3 the main transformer 8 and the field circuit converter 9 are shown connected by connection lines 16.

Each connection line 16 has a first branch 20 (figure 4) with a first switch 21 and the coupling circuit 15 comprises a second branch 22 in parallel with the first branch 20.

The second branch 22 has a second switch 23 in series with a one-way component 24; also the capacitor bank 13 is series with these components.

The control unit 11 (also in this case a single control unit 11 for each connection line 16 or a single control unit 11 that independently controls the switches 21, 23 of each connection line 16) is connected to the respective connection line 16 and, in addition, drives the switches 21 and 23, i.e. it detects the voltage of the connection line 16 and operates the first and second switches 21, 23 accordingly.

The one-way component 24 is a diode arranged to cause the capacitor bank 13 to supply energy to the field circuit 3 when it is discharged.

In addition, also a charging component 25 such as a battery or the like in parallel with the capacitor bank 13 may be provided.

It is anyhow clear that (thanks to the diode 24) charging of the capacitor bank 13 may also be carried out during operation via the branch 22 (i.e. with switch 21 open and switch 23 closed) in case there is no fault at the grid 5 and the voltage at the connection lines 16 has its nominal value.

The operation of the static exciter 1 in the third embodiment of the invention is apparent from what described and illustrated and is substantially the following.

During normal operation (i.e. the grid voltage is at its nominal value) the switch 21 is closed (dashed line in figure 4) whereas the switch 23 is open (dashed line in figure 4); therefore during normal operation the branch 20 is operative whereas the branch 22 is not operative.

When a failure occurs and the grid voltage falls, also the voltage at the low voltage side of the main transformer 8 falls and, thus, the voltage of one or more of the connection lines 16 falls.

With reference to only one connection line (the operation is the same for each connection line) when the control unit 11 detects that the voltage of the connection line 16 (that is indicative of the voltage of the grid 5) falls below a prefixed voltage value, it drives the switch 21 to open, and the switch 23 to close.

In this respect, figure 4 shows in full line the configuration of the switch 21 and the switch 23 in case of failure with grid voltage drop; therefore in case of failure the branch 20 is not operative and the branch 22 is operative.

When the switch 23 is closed, the capacitor bank 13 is discharged and the diode 24 forces the discharge direction, such that electric power is injected into the field circuit converter 9 and thus into the field circuit 3; the switch 21 (that is open) prevents the capacitor bank 13 from being short-circuited.

After a failure, the automatic security and protection systems restore the grid voltage in a short time.

When the control unit 11 detects that the voltage at the connection line 16 is above the prefixed voltage value, it drives the switch 21 to close and the switch 23 to open.

Closing of switch 21 and opening of switch 23 may also be carried out by the control unit 11 with a delay, such that the capacitor bank 13 is charged.

In addition or alternatively, the charging component 25 may charge the capacitor bank 13.

### METHOD FOR RETROFITTING

The present invention also refers to a method for retrofitting a static exciter of an electric generator.

The method comprises providing at least one capacitor bank 13 between the low voltage side of the main transformer 8 and the AC side of the field circuit converter 9.

Advantageously, also providing a coupling circuit 15 connecting the capacitor bank 13 to connection lines 16 between the low voltage side of the main transformer 8 and the AC side of the field circuit converter 9 is provided.

This retrofitting method is particularly advantageous because there is no need of modifying the rotor and, thus, there is no need of opening the generator casing and installing any component aboard of the rotor.

### METHOD FOR OPERATING A STATIC EXCITER

The present invention also refers to a method for operating a static exciter of an electric generator.

According to the method, the capacitor bank 13 injects electric power between the low voltage side of the main transformer 8 and the AC side of the field circuit converter 9 when the grid voltage falls below a prefixed voltage value.

Naturally the features described may be independently provided from one another.

In practice the materials used and the dimensions can be chosen at will according to requirements and to the state of the art.

### REFERENCE NUMBERS

- 1: static exciter
- 2: electric generator
- 3: field circuit
- 4: busbar
- 5: electric grid
- 6: transformer
- 8: main transformer
- 9: field circuit converter
- 11: control unit
- 13: capacitor bank
- 15: coupling circuit
- 16: connection line
- 17: auxiliary converter
- 18: auxiliary transformer
- 19: auxiliary connection line
- 20: first branch
- 21: first switch
- 22: second branch
- 23: second switch
- 24: one-way component
- 25: charging component

## Claims

1. Static exciter (1) of an electric generator (2) comprising a main transformer (8) having its high voltage side connected to a grid (5) and its low voltage side connected to a field circuit converter (9) that feeds a generator field circuit (3), said static exciter (1) further comprising a control unit (11) arranged to detect the status of the grid (5) to cause at least a capacitor bank (13) to supply energy to said generator field circuit (3) in case the voltage of the grid (5) falls below a prefixed voltage value, **characterised in that** the capacitor bank (13) is connected between the low voltage side of the main transformer (8) and the AC side of the field circuit converter (9).

2. Static exciter (1) as claimed in claim 1, **characterised by** comprising at least a coupling circuit (15) connecting the capacitor bank (13) to connection lines (16) between the low voltage side of the main transformer (8) and the AC side of the field circuit converter (9).

3. Static exciter (1) as claimed in claim 2, **characterised in that** the coupling circuit (15) comprises an auxiliary converter (17) having a DC side connected to the capacitor bank (13) and an AC side coupled to the connection lines (16).

4. Static exciter (1) as claimed in claim 3, **characterised in that** the auxiliary converter (17) is a bidirectional converter.

5. Static exciter (1) as claimed in claim 3, **characterised in that** the AC side of the auxiliary converter (17) is inductively coupled to the connection lines (16).

6. Static exciter (1) as claimed in claim 5, **characterised in that** the inductive coupling of the AC side of the auxiliary converter (17) to the connection lines (16) is realised via at least an auxiliary transformer (18).

7. Static exciter (1) as claimed in claim 6, **characterised in that** the control unit (11) detects the voltage of at least an auxiliary connection line (19) between the auxiliary converter (17) and the auxiliary transformer (18) and drives the auxiliary converter (17) accordingly.

8. Static exciter (1) as claimed in claim 7 and 4, **characterised in that** the control unit (11) drives the auxiliary converter (17) such that it lets the capacitor bank (13) be discharged or the capacitor bank (13) be charged.

9. Static exciter (1) as claimed in claim 3, **characterised by** comprising a plurality of capacitor banks (13) each connected to an auxiliary converter (17) each connected to an auxiliary transformer (18) coupled to a connection line (16) between the main transformer (8) and the field circuit converter (9).

10. Static exciter (1) as claimed in claim 2, **characterised in that** the connecting line (16) has a first branch (20) with a first switch (21) and **in that** the coupling circuits (15) comprises a second branch (22) in parallel with the first branch (20) having at least a second switch (23) in series with at least a one-way component (24), also the capacitor bank (13) being connected to the second branch (22), wherein the control unit (11) detects the voltage of the connection line (16) and operates the first and second switches (21, 23) accordingly.

11. Static exciter (1) as claimed in claim 10, **characterised in that** the one-way component (24) is a diode arranged to cause the capacitor bank (13) to supply energy to the field circuit (3) when it is discharged.

12. Static exciter (1) as claimed in claim 10, **characterised by** further comprising a charging component (25) in parallel with the capacitor bank (13) and/or wherein the control unit (11) closes the first switch (21) and opens the second switch (23) with a delay, such that the capacitor bank (13) is charged.

13. Method for retrofitting a static exciter (1) of an electric generator, the static exciter (1) comprising a main transformer (8) having its high voltage side connected to the grid (5) and its low voltage side connected to a field circuit converter (9) that feeds a generator field circuit (3), said static exciter (1) further comprising a control unit (11) arranged to detect the status of the grid (5) to cause at least a capacitor bank (13) to supply energy to said generator field circuit (3) in case the voltage of the grid falls below a prefixed voltage value, wherein said method comprises providing at least one capacitor bank (13) between the low voltage side of the main transformer (8) and the AC side of the field circuit converter (9).

14. Method according to claim 13, **characterised by** also providing the static exciter (1) with at least a coupling circuit (15) connecting the capacitor bank (13) to connection lines (16) between the low voltage side of the main transformer (8) and the AC side of the field circuit converter (9).

15. Method for operating a static exciter (1) of an electric generator comprising a main transformer (8) having its high voltage side connected to the grid (5) and its low voltage side connected to a field circuit converter (9) that feeds a generator field circuit (3), said static exciter (1) further comprising a control unit (11) arranged to detect the status of the grid (5) to cause at least a capacitor bank (13) to supply energy to said generator field circuit (3) in case the voltage of the grid (5) falls below a prefixed voltage value, **characterised in that** the capacitor bank (13) injects electric power between the low voltage side of the main transformer (8) and the AC side of the field circuit converter (9).
